# EUROPÄISCHE PATENTSCHRIFT

(11) **EP 3 096 971 B1**
(45) Veröffentlichungstag und Bekanntmachung des Hinweises auf die Patenterteilung: **26.02.2020**
(21) Anmeldenummer: 15700662.8
(22) Anmeldetag: 14.01.2015
(51) Int. Cl.: B60L 5/08, B60L 5/22

(54) **ÜBERWACHUNGSEINRICHTUNG FÜR STROMABNEHMER**
MONITORING DEVICE FOR CURRENT COLLECTORS
DISPOSITIF DE SURVEILLANCE POUR PANTOGRAPHE

(30) Priorität: 24.01.2014 AT 500462014
(43) Veröffentlichungstag der Anmeldung: 30.11.2016
(73) Patentinhaber: Siemens Mobility Austria GmbH, 1210 Wien (AT)
(72) Erfinder: BECHER, Klemens, A-8054 Attendorf (AT); KITZMÜLLER, Andreas, A-8010 Graz (AT)
(74) Vertreter: Deffner, Rolf
(86) Internationale Anmeldenummer: PCT/EP2015/050549
(87) Internationale Veröffentlichungsnummer: WO 2015/110325

(56) Entgegenhaltungen:
- EP-A2- 0 853 300
- GB-A- 2 420 539
- JP-A- 2007 189 754

## Beschreibung

Als Stromabnehmer werden Vorrichtungen an Fahrzeugen zum Übertragen elektrischer Energie von einer fest montierten stromführenden Leitung zu den elektrischen Einrichtungen des Fahrzeugs bezeichnet.

Anwendung finden Stromabnehmer überwiegend bei elektrisch angetriebenen Schienenfahrzeugen sowie Oberleitungsbussen, bei Standseilbahnen zur Versorgung der Beleuchtung und der Heizung, außerdem bei Autoscootern sowie Oberleitungsfähren.

Je nach Einsatzbereich haben sich unterschiedliche Bauformen herausgebildet. Diese sind insbesondere von der Ausgestaltung des Leitungssystems des betreffenden Systems abhängig, d.h. ob die Fahrleitungen beispielsweise als Oberleitung wie meist bei Eisen-, Straßen- oder Stadtbahnen, oder als seitlich angeordnete Stromschiene wie vorzugsweise bei U-Bahnen ausgeführt sind.

Bei Oberleitungen werden häufig Scherenstromabnehmer, sogenannte Pantografen eingesetzt. Sie können für beide Fahrtrichtungen eingesetzt werden und gewährleiten auch bei hohen Geschwindigkeiten einen kontinuierlichen Kontakt zwischen Fahrdraht und Stromabnehmer.

Bei Hochgeschwindigkeitszügen stoßen Scherenstromabnehmer allerdings an die Grenze ihrer Zuverlässigkeit. Für diese Züge werden daher bevorzugt sogenannte Halbscheren- und Einholm-Stromabnehmer mit besseren aerodynamischen Eigenschaften wie geringerem Luftwiderstand verwendet.

Für U- und S-Bahnen mit seitlich neben dem Gleis angeordneten Stromschienen gibt es einfacher beschaffene Stromabnehmerbügel, die schleifend auf, seitlich oder unter der Stromschiene entlanggeführt werden.

Gemeinsam ist allen Stromabnehmertypen, dass sie auf der Außenhülle der Fahrzeuge angebracht sind und teilweise erheblich über diese hinausragen.

Sie sind daher besonderen Belastungen und Beanspruchungen und einem hohen Schadensrisiko ausgesetzt.

Im Fall einer Beschädigung des Stromabnehmers besteht weiterhin die Gefahr, dass es durch abgelöste Teile zu weiteren Schäden an den Fahrzeugen und eventuell sogar zur Verletzung von Personen kommt.

Aus dem Stand der Technik ist beispielsweise die GB 2 420 539 A bekannt, welche eine Stromabnehmeranordnung mit einem Ausleger zeigt. Der Ausleger ist in einer Weise ausgeführt, dass er bei einem Aufprall eines Objekts auf die Stromabnehmeranordnung bricht. Ein Bruch des Auslegers bewirkt einen von einem Sensor detektierbaren Druckabfall in einem Druckluftkreislauf. Auf Basis einer Detektion durch den Sensor wird ein Warnsignal erzeugt.

Weiterhin offenbart die JP 2007 189754 A einen Pantographen für ein Fahrzeug, welcher einen Befestigungsbolzen aufweist, der im Fall einer übermäßigen Belastung des Pantographen bricht und den Pantographen von einer Oberleitung trennt.

Ferner ist die EP 0 853 300 A2 bekannt, in welcher ein Überwachungsverfahren für einen Stromabnehmer eines Fahrzeugs beschrieben ist, bei dem mittels eines Funksensor Signale an einen Empfänger in dem Fahrzeug übertragen werden, über welche Stellungen des Stromabnehmers detektiert werden.

Der Erfindung liegt daher die Aufgabe zugrunde, Stromabnehmer auf Beschädigungen zu überwachen und Defekte und Schäden unverzüglich zu melden.

Erfindungsgemäß wird dies durch die Vorrichtung gemäss Anspruch 1 erreicht.

Mit der Erfindung kann beispielsweise der Fahrer, der Betreiber oder das Wartungspersonal eines Schienenfahrzeuges unmittelbar auf einen potentiell unsicheren Zustand des Fahrzeuges bzw. eine mögliche "Störstelle" auf der Strecke hingewiesen werden.

Das ist besonders dann wichtig, wenn durch abgebrochene Teile ein Verletzungsrisiko für Personen oder von Schäden an der Infrastruktur oder nachfolgenden Fahrzeugen entsteht. So kann beispielsweise durch einen abgebrochenen Stromabnehmerschuh hohe Brandgefahr entstehen.

Vorteilhaft einsetzbar ist die Erfindung auch bei Schienenfahrwegen mit seitlichen Stromschienen, wenn der Stromabnehmer an einem Fahrwerk eines Schienenfahrzeuges befestigt ist.

Günstig ist es, wenn zumindest ein Verbindungselement des Stromabnehmers eine Sollbruchstelle aufweist, die durch den Bruchsensor überbrückt wird.

### Bezugszeichenliste

- 1: Stromabnehmerschuh
- 2: Hochspannungsisolator
- 3: Detektoreinheit
- 4: Fahrerinformationssystem
- 5: Bruchsensor
- 6: Federn
- 7: Lager
- 8: Starkstromleiter
- 9: Sollbruchstelle des Hochspannungsisolators

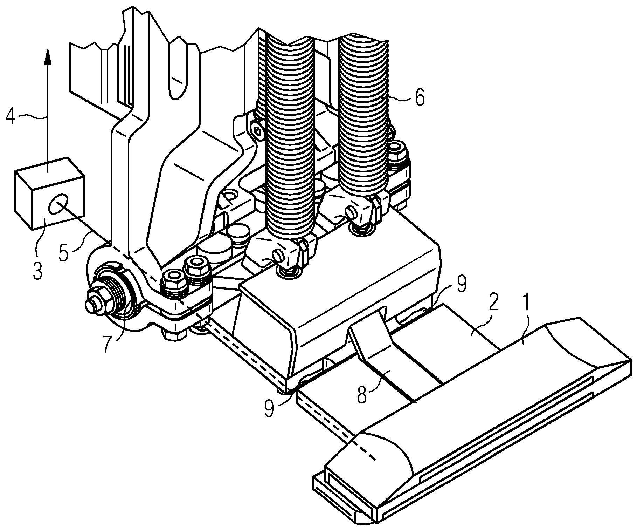

## Patentansprüche

1. Überwachungseinrichtung umfassend ein Fahrzeug mit einem Stromabnehmer, wobei der Stromabnehmer am Fahrzeug befestigt ist und Kontaktmittel (1) zur elektrischen Kontaktierung einer Fahrleitung umfasst, wobei die mechanische Verbindung zwischen den Kontaktmitteln und dem Fahrzeug mittels Verbindungselementen (2,6,7) erfolgt, wobei entlang der Verbindungselemente (2,6,7) zumindest ein mit einer Detektoreinheit (3) verbundener Bruchsensor (5) in der Weise verläuft, dass bei einer Beschädigung eines Verbindungselementes (2,6,7) der Zustand des Bruchsensors (5) in der Weise verändert wird, dass mittels der Detektoreinheit (3) die Beschädigung feststellbar ist und an ein mit der Detektoreinheit (3) verbundenes Fahrerinformationssystem (4) übermittelbar ist, **dadurch gekennzeichnet, dass** als Bruchsensor (5) ein zugfestes Seil vorgesehen ist.

2. Überwachungseinrichtung nach Anspruch 1, **dadurch gekennzeichnet, dass** der Stromabnehmer an einem Fahrwerk eines Schienenfahrzeuges befestigt ist und einen elektrischen Kontakt mit einer seitlichen Stromschiene eines Schienenfahrweges aufweist.

3. Überwachungseinrichtung nach Anspruch 1, **dadurch gekennzeichnet, dass** zumindest eines der Verbindungselemente (2,6,7) des Stromabnehmers eine Sollbruchstelle aufweist, die durch den Bruchsensor überbrückt wird.

## Claims

1. Monitoring device comprising a vehicle with a current collector, wherein the current collector is fastened to the vehicle and has contact means (1) for electrical contact with a contact line, wherein the mechanical connection between the contact means and the vehicle is established by means of connecting elements (2, 6, 7), wherein at least one fracture sensor (5), which is connected to a detector unit (3), runs along the connecting elements (2, 6, 7) in such a way that, when one of the connecting elements (2, 6, 7) is damaged, the state of the facture sensor (5) is changed in such a way that the damage can be established by means of the detector unit (3) and can be transmitted to a driver information system (4), which is connected to the detector unit (3), **characterised in that** a high tensile cable is provided as the fracture sensor (5).

2. Monitoring device according to claim 1, **characterised in that** the current collector is fastened to a bogie of a rail vehicle and has an electrical contact with a power rail to the side of a railway track.

3. Monitoring device according to claim 1, **characterised in that** at least one of the connecting elements (2, 6, 7) of the current collector has an intended break point, which is bridged by the fracture sensor.

## Revendications

1. Mécanisme de surveillance comprenant un véhicule équipé d'un connecteur de courant, dans lequel le connecteur de courant est fixé au véhicule, et des moyens de contact (1) pour la mise en contact électrique d'une ligne de contact ; dans lequel la liaison mécanique entre les moyens de contact et le véhicule a lieu au moyen d'éléments de liaison (2, 6, 7) ; dans lequel au moins un capteur de rupture (5) relié à une unité de détection (3) s'étend le long des éléments de liaison (2, 6, 7), d'une manière telle que, lors d'une dégradation d'un élément de liaison (2, 6, 7), l'état du capteur de rupture (5) est modifié d'une manière telle que la dégradation peut être constatée au moyen de l'unité de détection (3) et peut être transmise à un système d'information au conducteur (4) relié à l'unité de détection (3), **caractérisé en ce qu'**à titre de capteur de rupture (5), on prévoit un câble résistant à la traction.

2. Mécanisme de surveillance selon la revendication 1, **caractérisé en ce que** le connecteur de courant est fixé à un train de roulement d'un véhicule ferroviaire et présente un contact électrique avec un rail conducteur latéral d'une voie ferrée.

3. Mécanisme de surveillance selon la revendication 1, **caractérisé en ce qu'**au moins un des éléments de liaison (2, 6, 7) du connecteur de courant présente un point destiné à la rupture qui contourne le capteur de rupture.
